## Europäisches Patentamt

## European Patent Office

## Office européen des brevets

(19)

(11) Veröffentlichungsnummer: **0 031 793**
**B1**

(12) **EUROPÄISCHE PATENTSCHRIFT**

(45) Veröffentlichungstag der Patentschrift:
**16.05.84**

(51) Int. Cl.³: **C 22 B 60/02, C 01 B 25/229**

(21) Anmeldenummer: **80810366.7**

(22) Anmeldetag: **25.11.80**

(54) **Verfahren zur Herstellung von Phosphorsäure, bei dem Uran in einer gewinnbaren Form erhalten wird.**

(30) Priorität: **03.12.79 US 99917**

(43) Veröffentlichungstag der Anmeldung:
**08.07.81 Patentblatt 81/27**

(45) Bekanntmachung des Hinweises auf die Patenterteilung:
**16.05.84 Patentblatt 84/20**

(84) Benannte Vertragsstaaten:
**BE FR GB**

(56) Entgegenhaltungen:
**FR - A - 1 148 079**
**FR - A - 1 397 587**
**GB - A - 730 908**
**US - A - 2 789 879**
**US - A - 2 841 465**
**US - A - 3 653 826**
**US - A - 3 711 591**
**US - H - 970 007**

(73) Patentinhaber: **Schweizerische Aluminium AG,**
**CH-8212 Neuhausen am Rheinfall (CH)**

(72) Erfinder: **Gerunda, Arthur B., 225 Oak Neck Lane, West Islip New York 11795 (US)**
Erfinder: **Goers, Walter E., 122 South State Road, Briarcliff Manor New York 10510 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von Phosphorsäure, bei dem Uran
in einer gewinnbaren Form erhalten wird

Die vorliegende Erfindung bezieht sich auf ein Verfahren zur Herstellung einer hochkonzentrierten Phosphorsäure und Gips als Nebenprodukt aus Phosphaterz. Im Phosphaterz ist üblicherweise Uran enthalten. Die vorliegende Erfindung in dem Verfahren besteht im Überführen des Urans in gewinnbare Form.

Insbesondere wird mit dem gegenwärtigen Verfahren, wie es die US-Patentschrift 3 653 826 beschreibt, eine hochkonzentrierte Phosphorsäure und ein Gipsnebenprodukt durch folgende Schritte erhalten:

— Zersetzung des Phosphaterzes mit Schwefelsäure und Phosphorsäure, wobei ein Slurry entsteht, der Phosphorsäure mit einem Gehalt von 44 bis 55% $P_2O_5$ und Kalziumsulfathalbhydratkristalle enthält;
— Filtrierung, um die Phosphorsäure abzutrennen;
— Überführen des Halbhydrats in einen Slurry, wobei Kalziumsulfatdihydrat und eine Phosphorsäure niedriger Konzentration entsteht;
— Abtrennung des als Nebenprodukt anfallenden Dihydrats und
— Recyclierung der Phosphorsäure niedriger Konzentration.

Die meisten der üblichen Methoden verwenden ein Naßverfahren zur Herstellung von Phosphorsäure einer niedrigen Konzentration von etwa 30% $P_2O_5$. Für den praktischen Gebrauch wird eine derartige Säure üblicherweise durch Eindampfen auf höhere Konzentration gebracht, was selbstverständlich zusätzliche Kosten und Prozeßstufen unter Verwendung großer Mengen von Dampf erfordert.

Die US-H-T 970 007 beschreibt ein Verfahren zur Urangewinnung in einem Naßprozeß unter Verwendung von Phosphorsäure, wobei die Säure mit einem Gemisch von Ammoniak oder einem Ammonsalz, einem metallischen Reduktionsmittel (Fe, Al oder Zn) und einem mischbaren Lösungsmittel, z. B. Methanol, behandelt wird. Die von der gereinigten Phosphorsäure abgetrennten Fällungsprodukte bestehen aus einem Metallphosphat-Uran-Gemisch. Diese Feststoffe werden dann in Säure gelöst und das Uran daraus durch Flüssig-flüssig-Extraktion erhalten. Nach Rektifizieren und Abtrennen von Wasser werden die eingesetzten Lösungen im Kreislauf geführt. Mit einem derartigen Verfahren erhält man mehr als 99% des gewinnbaren Urans. Gleichzeitig werden etwa 90% Phosphor als gereinigte Phosphorsäure zurückerhalten.

Phosphaterz enthält üblicherweise geringe Mengen an Uran, und es ist überaus erwünscht, dieses zu gewinnen. Der vorbeschriebene Prozeß, der Phosphorsäure einer niedrigen Konzentration von etwa 30% $P_2O_5$ gewinnt, ist trotz der zusätzlichen Eindampfungskosten reizvoll, weil die heute verwendeten Uranextraktionsmethoden nur technisch und wirtschaftlich durchführbar sind, wenn die Phosphorsäure Konzentration von etwa 30% $P_2O_5$ oder weniger aufweist.

Auf der anderen Seite ist der Halbhydratprozeß dadurch erwünscht, daß er Phosphorsäure mit einer $P_2O_5$-Konzentration von etwa 45—50% erzeugt und dabei die teure Eindampfungsstufe umgeht. Jedoch ist unvorteilhafterweise dieser Prozeß bis jetzt für die Urangewinnung unbrauchbar.

Der vorliegenden Erfindung liegt daher die Aufgabe zugrunde, hochkonzentrierte Phosphorsäure aus Phosphaterz herzustellen und dabei das Uran in gewinnbare Form zu bringen.

Es ist eine weitere Aufgabe der vorliegenden Erfindung, dieses in einem wirtschaftlichen und technisch ausführbaren Verfahrensablauf zu erreichen.

Weitere Aufgaben und Vorteile der vorliegenden Erfindung werden im folgenden genannt.

Es wurde gefunden, daß mit dem Verfahren der vorliegenden Erfindung die vorgenannten Aufgaben und Vorteile gelöst bzw. erreicht wurden.

Das Verfahren gemäß der vorliegenden Erfindung erzeugt Phosphorsäure und Gips durch die Verfahrensstufe:

(a) Zersetzung von geringen Mengen Uran enthaltendem Phosphaterz mit Schwefelsäure und Phosphorsäure, wobei eine hochkonzentrierte Phosphorsäure und Kalziumsulfathalbhydrat entsteht;
(b) Filtration des entstehenden Gemischs, um die konzentrierte Phosphorsäure abzutrennen;
(c) Überführen des Kalziumsulfathalbhydrats in einen Slurry und Hydratisieren, um Kalziumsulfatdihydrat in einer Phosphorsäure niedriger Konzentration herzustellen;
(d) Filtration des erhaltenen Gemischs, wobei Kalziumsulfatdihydrat als Nebenprodukt und eine niedrig konzentrierte Phosphorsäure als Filtrat erhalten wird; und
(e) Recyclierung des niedrig konzentrierten Phosphorsäurefiltrats.

Gemäß der Verbesserung durch die vorliegende Erfindung wird das Uran in der Zersetzungsstufe (a) von dem 6wertigen zum 4wertigen Zustand reduziert und dabei in dem nassen Säurelösungsprozeß in den unlöslichen Zustand überführt. Dabei ist es gezwungen, mit dem Kalziumsulfathalbhydrat auszufallen. Das Uran wird dann während der Überführungsstufe (c) von dem +4wertigen in den +6wertigen Zustand oxidiert und dabei in der niedrig konzentrierten Phosphorsäure gelöst, woraus es gewinnbar ist.

Gemäß dem Verfahren der vorliegenden Erfindung wird das Uran gezwungen, gemeinsam mit dem Halbhydrat auszufallen. Das Halbhydrat wird im weiteren Verlauf in der niedrig konzen-

2

trierten Phosphorsäure zu Dihydrat (Gips) übergeführt. Das Uran kann dann von der Phosphorsäure niedriger Konzentration durch Ionenaustauschermethoden, Lösungsextraktion oder irgendeine sonstige herkömmliche Methode extrahiert werden.

Es folgt eine genaue Beschreibung der Erfindung. In der Stufe (a) des Verfahrens der vorliegenden Erfindung wird das geringe Mengen Uran enthaltende Phosphaterz mit Schwefelsäure und Phosphorsäure zersetzt, wobei eine hochkonzentrierte Phosphorsäure und Kalziumsulfathalbhydrat hergestellt wird. Vorzugsweise wird das Phosphaterz gemahlen, um die Oberfläche zu vergrößern und somit die Reaktion zu beschleunigen. Die Phosphorsäurekomponente wird vorteilhaft wenigstens zum Teil durch Recyclieren von einer nachfolgenden Verfahrensstufe zugesetzt und kann entweder eine hoch oder niedrig konzentrierte Phosphorsäure sein; z. B. kann eine Säure, die von 10 bis 50% $P_2O_5$ enthält, gebraucht werden. Nach Möglichkeit wird Schwefelsäure mit einer Konzentration größer als 90%, z. B. 90—99%, gebraucht. Das Zersetzungsgemisch wird vorteilhaft zwischen 2 und 8 Stunden bei einer Reaktionstemperatur von 60—100°C in Bewegung gehalten, vorteilhaft 4—5 Stunden bei 70—95°C. Um hohe Ausbeuten sicherzustellen, ist es vorteilhaft, bei der Zersetzung eine freie Schwefelsäurekonzentration von 2—3% aufrechtzuerhalten.

In dieser Stufe (a) der Reaktion bildet das Kalzium im Erz ein Agglomerat von stabilem Kalziumsulfathalbhydrat, wobei gleichzeitig eine hochkonzentrierte Phosphorsäure gebildet wird, d. h. mit einem Gehalt von 44 bis 55% $P_2O_5$. Hierin liegt der besondere Vorteil des Verfahrens nach der vorliegenden Erfindung, denn es schließt die Notwendigkeit der teuren Eindampfungsprozedur zur Erhöhung der Phosphorsäurekonzentration aus. Jedoch kann die gegenwärtige Uranextraktionstechnologie nicht das Uran wirtschaftlich aus einer Lösung, die eine $P_2O_5$-Konzentration größer als etwa 30% hat, gewinnen. Gemäß der Stufe (b) des vorliegenden Verfahrens wird der Slurry filtriert, um das Phosphorsäureprodukt von dem Halbhydrat zu trennen, wobei das Uran aufgrund seiner Löslichkeitseigenschaften mit dem sauren Produkt vom Slurry entfernt wird. Die Verbesserung durch die vorliegende Erfindung beinhaltet die Reduzierung des Urans in der Zersetzungsstufe von seiner löslichen +6-Wertigkeit zur +4-Wertigkeit und zwingt das Uran, mit dem Kalziumsulfathalbhydrat auszufallen. Wie weiter unten beschrieben, wird das Uran nachfolgend in einem späteren Verfahrensschritt in einer Phosphorsäure niedriger Konzentration vom 4wertigen zum 6wertigen Zustand oxidiert und ist damit in eine gewinnbare Form gebracht. Jedes mögliche Reduktionsmittel kann in der Zersetzungsstufe verwendet werden. Das Reduktionsmittel kann fest, flüssig oder gasförmig sein, wie z. B. $SO_2$, welches im Reaktor über Düsen oder irgendeine andere üblicherweise gebrauchte Anordnung eingebracht wird. Zusätzlich können Chemikalien hinzugefügt werden, die katalytisch oder auf irgendeine andere Weise die rasche Reduktion des Urans zum unlöslichen Zustand herbeizuführen vermögen. Reduktionsmittel und Chemikalien sind erwünscht, wenn sie nicht die chemische Zersetzung des Erzes, die Auslaugung des Phosphors, das chemische Gleichgewicht der Zersetzung beeinträchtigen oder signifikante Änderungen in den physikalischen Eigenschaften der Slurrybestandteile hervorrufen, die Probleme mit den nachfolgenden Standardprozessen oder -operationen geben könnten.

Die Reduktionsmittel sollten in solchen Mengen zugegeben werden, daß sie folgende Bedingungen erfüllen:

1. Wenigstens sollten stöchiometrische Mengen zugegeben werden, basierend auf dem Gehalt an Uran und anderen Komponenten, die den Reduktionsvorgang beeinflussen.
2. Sie sollten im Einklang mit dem Material der Reaktoren, Rührer und der Leitungssysteme der entsprechenden Anlage, Fabrikationsmethode etc. stehen.
3. Es sollte keine ernsthafte Änderung der Kristallagglomeration, Viskosität der Flüssigkeit oder anderer Eigenschaften eintreten, die die Filtrierbarkeit beeinflußt, Schäumen hervorruft oder andere Faktoren des Verfahrensablaufs beeinflußt oder gangbare Charakteristika der Produktsäure ändert.

Die ausgewählten Reduktionsmittel sind vorzugsweise jene, die die oberen Kriterien erfüllen und dazu nicht signifikant zu den Verfahrenskosten beitragen. Eisen als Beispiel eines festen Zusatzes und $SO_2$ als Beispiel eines gasförmigen Zusatzes sind typische billige Reduktionsmittel. Lösungen von verschiedenen Sulfiten sind Flüssigkeiten, die zugesetzt werden können, werden aber nicht bevorzugt, da zusätzliches Wasser bzw. Flüssigkeit die $P_2O_5$-Konzentration während der Reaktion beeinflussen kann.

Der Schritt (b) des Verfahrens der vorliegenden Erfindung ist die Filtrierung des erhaltenen Gemischs, um das hochkonzentrierte Phosphorsäureprodukt unter Zurücklassung von einem Halbhydratfilterkuchen, der das reduzierte Uran enthält, abzutrennen. Der Kuchen von Kalziumsulfathalbhydrat, von dem die Phosphorsäure separiert worden ist, wird vorzugsweise mit recyclierter, niedrig konzentrierter Phosphorsäure aus einer nachfolgenden Verfahrensstufe gewaschen.

Der Filterkuchen wird dann in einen Slurry überführt und hydratisiert, wobei Kalziumsulfatdihydrat als Nebenprodukt und niedrig konzentrierte Phosphorsäure (etwa 10—20% $P_2O_5$) entsteht. Die Flüssigkeit zur Hydratisierung des Kalziumsulfathalbhydrats sollte eine niedrig konzentrierte Phosphorsäure und eine niedrig konzentrierte Schwefelsäure enthalten. Niedrig konzentrierte Phosphorsäure kann von einem nachfolgenden Verfahrensschritt recycliert werden, und Schwefelsäure wird je nachdem wie notwendig ergänzend hinzugefügt. Das Gemisch wird bei einer Temperatur von etwa 50–80°C gehandhabt und erfordert normalerweise 1–3 Stunden, um praktisch das gesamte Halbhydrat zu Dihydrat zu überführen.

Das Uran wird selbstverständlich bei der Stufe »Überführung in den Slurry« als 4wertig eingeführt. Gemäß der vorliegenden Erfindung wird dieser Verfahrensschritt derart ausgeführt, daß die Oxidation des Urans von der 4-Wertigkeit zur 6-Wertigkeit begünstigt und gefördert wird, wobei es in der Phosphorsäure niedriger Konzentration löslich wird und daraus gewonnen werden kann. Mit der gegenwärtigen Technologie kann das Uran aus niedrig konzentrierter Phosphorsäure, die weniger als 30% $P_2O_5$ enthält, gewonnen werden, etwa durch Ionenaustausch oder Lösungsextraktion.

Jedes mögliche Oxidationsmittel kann in der Stufe »Überführen des Filterkuchens in einen Slurry« gebraucht werden. Die Anforderungen an die Oxidationsmittel sind jenen der Reduktionsmittel ähnlich. Kostengünstige Mittel sind bevorzugt. Begasen mit Luft könnte sich als einfachstes und billigstes erweisen. Jedoch können andere konventionelle Oxidationsmittel wie Peroxide, Chlorate, Perchlorate, Nitrate und Permanganate ebenfalls verwendet werden.

Das Gemisch wird dann filtriert, um das Kalziumsulfatdihydrat als Nebenprodukt zu erhalten und die niedrg konzentrierte Phosphorsäure als Filtrat. Das Filtrat enthält das oxidierte Uran von der Stufe »Überführen in einen Slurry« woraus es, wie oben angegeben, gewonnen werden kann. Wie oben auch angeführt, wird die zurückbleibende niedrig konzentrierte Phosphorsäure, vorzugsweise nachdem das Uran daraus entfernt wurde, zur Zersetzungsstufe, zum Halbhydratfilter oder zur Dihydratfilterstufe oder zu beiden recycliert.

In einem bevorzugten wirtschaftlichen Verfahrensablauf kann man die in dem vorher angeführten US-Patent 3 653 826, dessen Offenbarung anfangs dargestellt wurde, beschriebene Ausführung verwenden.

Das Verfahren der vorliegenden Erfindung und die dadurch erreichten Verbesserungen werden verständlicher, wenn die folgenden erläuternden Beispiele berücksichtigt werden.

### Beispiel

300 g gemahlenes Phosphaterz mit einer Korngröße von weniger als 0,6 mm werden in einen Zersetzer gegeben und 830 g Phosphorsäure mit 37% $P_2O_5$ hinzugegeben. Dabei wurde uranfreie Phosphorsäure verwendet, so daß es möglich war, das gesamte Uran aus dem Erz zu gewinnen. 243 g konzentrierte $H_2SO_4$ und das folgende Gemisch als Reduktionsmittel wurden hinzugefügt: 5 g pulverisiertes Eisen, 5 ml 70%ige HF und 5 g Lanthannitrat. Das gesamte Gemisch wurde bei etwa 90°C über etwa 4 Stunden gerührt. Anschließend erfolgte Filtrierung durch ein Polypropylentuch, wobei die entstandene hochkonzentrierte Phosphorsäure (etwa 45% $P_2O_5$) und der das reduzierte Uran enthaltende Kalziumsulfathalbhydratfilterkuchen anfällt. Der Filterkuchen wurde mit 360 g uranfreier Phosphorsäure (15% $P_2O_5$) gewaschen und dann der resultierende Kuchen in 709 g uranfreier Phosphorsäure (10% $P_2O_5$) wieder in einen Slurry überführt, zu dem 25 g verdünnte $H_2SO_4$ hinzugefügt wurden. Um das Uran zu oxidieren, wurden als Oxidationsmittel 10 ml einer 8molaren Natriumchloratlösung hinzugefügt und das Gemisch etwa $1^1/_2$ Stunden bei 60°C gerührt. Das Gemisch wurde filtriert, wobei der Dihydratfilterkuchen und die niedrig konzentrierte, das oxidierte Uran enthaltende Phosphorsäure (10–15% $P_2O_5$) anfällt.

Die Resultate sind in folgender Tabelle zusammengefaßt. Diese zeigt die Analysen des Ausgangsphosphaterzes, der Phosphorsäure nach der Filtration durch das Polypropylentuch und des Halbhydratfilterkuchens.

Tabelle

| Material | Menge g | Uran-analyse ppm | Uran-gehalt mg |
|---|---|---|---|
| Phosphaterz | 300 | 149,5 | 44,9 |
| Phosphorsäure | 586 | 12,3 | 7,2 |
| Halbhydratkuchen | 693 | 65,8 (trocken) | 40,2 |

Die obere Tabelle zeigt deutlich, daß das Uran in der Hauptsache im Kalziumsulfathalbhydratfilterkuchen enthalten ist. Es sei bemerkt, daß der Fehler bei etwa 5% liegt, was für diese schwierigen Analysen als zufriedenstellend angesehen wird. Der Urangehalt im Phosphaterz sollte gleich dem Urangehalt in der Säure plus dem Urangehalt im Filterkuchen sein, bzw. $44,9 = 7,2 + 40,2 = 47,4$. Zusätzliche Versuche wurden mit vergleichbaren Resultaten durchgeführt, wobei folgende Reduktionsmittel verwendet wurden.

Versuch 1:
Reduktionsmittel bestehend aus 50 g Natriumsulfit, 10 ml 70%ige HF und 10 g Lanthannitrat.
Versuch 2:
Reduktionsmittel bestehend aus 20 g Natriumsulfit.

Es ist möglich, diese Erfindung auch in anderer Weise zum Ausdruck zu bringen oder auszuführen, ohne sich vom Erfindungsgedanken zu entfernen oder von wesentlichen Merkmalen abzuweichen.

**Patentansprüche**

1. Verfahren zur Herstellung von Phosphorsäure und Gips durch

(a) Zersetzung des geringe Gehalte an Uran enthaltenden Phosphaterzes mit Schwefel- und Phosphorsäure, wobei Phosphorsäure mit einem Gehalt von 44 bis 55% $P_2O_5$ und Kalziumsulfathalbhydrat entsteht,
(b) Filtration des entstandenen Gemischs, um die konzentrierte Phosphorsäure abzutrennen,
(c) Überführen des Kalziumsulfathalbhydrats in einen Slurry und Herstellung von Kalziumsulfatdihydrat durch Hydratation in einer Phosphorsäure niedriger Konzentration,
(d) Filtration des resultierenden Gemischs, um Kalziumsulfatdihydrat als Nebenprodukt und als Filtrat Phosphorsäure niedriger Konzentration zu erhalten,
(e) Rückführung des Phosphorsäurefiltrats niedriger Konzentration, dadurch gekennzeichnet, daß das Verfahren durch folgende Schritte verbessert ist:

— Reduzierung des Urans in der Zersetzungsstufe (a) von dem 6wertigen zum 4wertigen Zustand, wodurch dasselbe in der wäßrigen sauren Lösung in den unlöslichen Zustand überführt wird und gezwungen ist, mit dem Kalziumsulfathalbhydrat auszufallen;
— Oxidierung des Urans während des Überführungsschrittes (c) des gefällten Halbhydrats in einen Slurry von der 4-Wertigkeit zur 6-Wertigkeit, wobei dasselbe in Phosphorsäure niedriger Konzentration löslich und damit gewinnbar wird.

2. Verfahren nach Anspruch 1, dadurch gekennzeichnet, daß die in Verfahrensschritt (a) zugesetzte Phosphorsäure wenigstens zum Teil aus einem der nachfolgenden Verfahrensschritte stammt.

3. Verfahren nach Anspruch 2, dadurch gekennzeichnet, daß die recyclierte Phosphorsäure 10—50% $P_2O_5$ enthält.

4. Verfahren nach Anspruch 3, dadurch gekennzeichnet, daß die Schwefelsäure im Verfahrensschritt (a) eine Konzentration von größer als 90% aufweist.

5. Verfahren nach Anspruch 3, dadurch gekennzeichnet, daß die Zersetzung gemäß Verfahrensschritt (a) über 2 bis 8 Stunden bei einer Temperatur von 60 bis 100°C erfolgt und eine freie Schwefelsäurekonzentration von 2—3% aufrecht erhalten wird.

6. Verfahren nach Anspruch 5, dadurch gekennzeichnet, daß die entstehende Phosphorsäure in der Zersetzungsstufe (a) eine Konzentration von 44 bis 55% $P_2O_5$ hat.

7. Verfahren nach Anspruch 5, dadurch gekennzeichnet, daß der Filterkuchen, bestehend aus Kalziumsulfathalbhydrat, des Verfahrensschritts (b) mit recyclierter Phosphorsäure niedriger Konzentration gewaschen wird.

8. Verfahren nach Anspruch 5, dadurch gekennzeichnet, daß Kalziumsulfathalbhydrat aus dem Verfahrensschritt (b) in einen Slurry überführt und mit einer Lösung, die Phosphorsäure niedriger Konzentration und Schwefelsäure niedriger Konzentration enthält, hydratisiert wird.

9. Verfahren nach Anspruch 8, dadurch gekennzeichnet, daß das in einen Slurry überführte und hydratisierte Gemisch bei einer Temperatur von 50—80°C über 1 bis 3 Stunden gehalten wird, wodurch praktisch das gesamte Halbhydrat in Dyhydrat überführt wird.

**Claims**

1. A process for the preparation of phosphoric acid and gypsum by

(a) digestion of phosphate ore having a low uranium content with sulphuric and phosphoric acids, thereby obtaining phosphoric acid containing from 44 to 55% $P_2O_5$ and calcium sulphate hemihydrate,
(b) filtration of the resultant mixture, to separate the concentrated phosphoric acid,
(c) conversion of the calcium sulphate hemihydrate into a slurry and preparation of calcium sulphate dihydrate by hydration in phosphoric acid of low concentration,
(d) filtration of the resultant mixture, to obtain calcium sulphate dihydrate as a by-product and, as filtrate, phosphoric acid of low concentration,
(e) recycling of the low concentration phosphoric acid filtrate, characterized in that the process is improved by the following steps:
— reduction of the uranium in the digestion stage (a) from the hexavalent to the tetravalent state, so that it is converted into the insoluble form in the aqueous acid solution, and is caused to precipitate out with the calcium sulphate hemihydrate;
— oxidation of the uranium during the conversion stage (c) of the hemihydrate, in a slurry, from the tetravalent to hexavalent state, so that it is soluble in the phosphoric acid of low concentration, and can be recovered therewith.

2. A process according to claim 1, characterised in that the phosphoric acid added in process step (a) is derived, in part at least, from one of the following process steps.

3. A process according to claim 2, characterised in that the recycled phosphoric acid contains 10—50% $P_2O_5$.

4. A process according to claim 3, characterized in that the sulphuric acid in process step (a) has a concentration greater than 90%.

5. A process according to claim 3, characterized in that the digestion in accordance with process step (a) is conducted for 2 to 8 hours at a temperature of from 60 to 100°C, and a free sulphuric acid concentration of 2—3% is maintained.

6. A process according to claim 5, characterized in that the phosphoric acid obtained in the digestion step (a) has a concentration of 44—55% $P_2O_5$.

7. A process according to claim 5, characterized in that the filter cake of process step (b), comprising calcium sulphate hemihydrate, is washed with recycled phosphoric acid of low concentration.

8. A process according to claim 5, characterised in that the calcium sulphate hemihydrate from process step (b) is converted into a slurry and hydrated with a solution which contains phosphoric acid in low concentration and sulphuric acid in low concentration.

9. A process according to claim 8, characterized in that the mixture, converted into a slurry and hydrated, is held at a temperature of 50—80°C for 1 to 3 hours, so that substantially all the hemihydrate is converted into dihydrate.

## Revendications

1. Procédé de préparation d'acide phosphorique et de sulfate de calcium par

(a) décomposition du minerai de phosphate contenant des petites quantités d'uranium par l'acide sulfurique et l'acide phosphorique, avec formation d'un acide phosphorique à une teneur de 44 à 55% de $P_2O_5$ et d'hémihydrate de sulfate de calcium,
(b) filtration du mélange obtenu permettant de séparer l'acide phosphorique concentré,
(c) mise à l'état de dispersion de l'hémihydrate du sulfate de calcium et préparation du dihydrate de sulfate de calcium par hydratation dans un acide phosphorique à basse concentration,
(d) filtration du mélange obtenu pour obtention du dihydrate de sulfate de calcium en produit secondaire et d'un acide phosphorique à basse concentration en filtrat,
(e) recyclage du filtrat d'acide phosphorique à basse concentration, caractérisé en ce que l'on améliore le procédé par les stades opératoires suivants:
— réduction de l'uranium au stade décomposition (a) de l'état hexavalent à l'état tétravalent, ce qui le fait passer à l'état insoluble dans la solution aqueuse acide et l'oblige à précipiter avec l'hémihydrate du sulfate de calcium;
— oxydation de l'uranium au cours du stade mise en dispersion (c) de l'hémihydrate précipité, de la valence 4 à la valence 6, ce qui le rend soluble dans l'acide phosphorique à basse concentration d'où on le récupère.

2. Procédé selon la revendication 1, caractérisé en ce que l'acide phosphorique ajouté au stade opératoire (a) provient en partie au moins de l'un des stades opératoires suivants.

3. Procédé selon la revendication 2, caractérisé en ce que l'acide phosphorique recyclé contient 10 à 50% de $P_2O_5$.

4. Procédé selon la revendication 3, caractérisé en ce que l'acide sulfurique présente au stade opératoire (a) une concentration supérieure à 90%.

5. Procédé selon la revendication 3, caractérisé en ce que la décomposition effectuée au stade opératoire (a) dure de 2 à 8 h à une température de 60 à 100°C, avec maintien d'une concentration en acide sulfurique libre de 2 à 3%.

6. Procédé selon la revendication 5, caractérisé en ce que l'acide phosphorique formé au stade décomposition (a) est à une concentration de 44 à 55% de $P_2O_5$.

7. Procédé selon la revendication 5, caractérisé en ce que le gâteau de filtration du stade opératoire (b) consistant en hémihydrate du sulfate de calcium est lavé avec de l'acide phosphorique recyclé à basse concentration.

8. Procédé selon la revendication 5, caractérisé en ce que l'on met l'hémihydrate du sulfate de calcium du stade opératoire (b) à l'état de dispersion et on l'hydrate à l'aide d'une solution contenant de l'acide phosphorique à basse concentration et de l'acide sulfurique à basse concentration.

9. Procédé selon la revendication 8, caractérisé en ce que le mélange mis à l'état de dispersion et hydraté est maintenu à une température de 50 à 80°C pendant une durée de 1 à 3 h, ce qui provoque la conversion de pratiquement tout l'hémihydrate en dihydrate.